Europäisches Patentamt

European Patent Office

Office européen des brevets

(19)

(11) **EP 0 844 756 A2**

(12) # EUROPEAN PATENT APPLICATION

(43) Date of publication:
27.05.1998 Bulletin 1998/22

(51) Int Cl.6: **H04J 14/02**, H04B 10/155

(21) Application number: 97309415.4

(22) Date of filing: 21.11.1997

(84) Designated Contracting States:
AT BE CH DE DK ES FI FR GB GR IE IT LI LU MC NL PT SE
Designated Extension States:
AL LT LV MK RO SI

(30) Priority: 22.11.1996 JP 311760/96

(71) Applicant: NEC CORPORATION
Tokyo (JP)

(72) Inventor: Kaneko, Tomoyuki
Minato-ku, Tokyo (JP)

(74) Representative: Orchard, Oliver John
JOHN ORCHARD & CO.
Staple Inn Buildings North
High Holborn
London WC1V 7PZ (GB)

(54) **Optical communication system and transmitting device**

(57) In an optical communication system and an optical transmitting device employed therein, there are two LDs coupled to an optical transmission circuit within a branch station. One of the LDs generates a transmission optical signal with a wavelength $\lambda i$, and the other generates an adjustment optical signal with a wavelength $\lambda x$. These two optical signals with wavelengths $\lambda i$ and $\lambda x$ are integrated in an optical coupler so as to be transmitted to a branching device where ADM is carried out, after passing through an optical amplifier where the output level is controlled to be fixed. Therefore, by adjusting with an adjuster the output level of the LD generating the adjustment optical signal, the level of the adjustment optical signal is adjusted, which makes it possible to alter the level of a transmission signal with the wavelength $\lambda i$ within the output from the optical amplifier.

FIG. 5

## Description

The present invention relates to an optical communication system having ADM (add drop multiplexing/branching and insertion) function for conducting WDM (wavelength division multiplex transmission, and to an optical transmitting device suitable for use in an optical communication system.

There have been proposals known to the applicants for the use of the optical ADM technique with a WDM transmitting method, although there have been few proposals for an optical communication system employing the optical ADM technique.

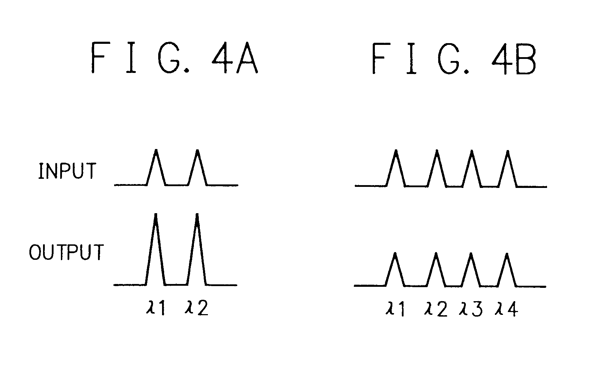

Previously proposed arrangements known to the applicants will now be described, for the purpose of enabling the present arrangements to be better understood with reference to Figs. 1 to 4 of the accompanying drawings in which:-

Fig. 1 is a block diagram of a previously proposed optical communication system,
Fig. 2 is a block diagram of another previous proposal for an optical communication system,
Fig. 3 is a waveform diagram showing the wavelengths of the inputs and outputs of a previously proposed optical amplifier, and
Fig. 4 is a waveform diagram showing the wavelengths of the inputs and outputs of a conventional optical amplifier when a signal number is altered.

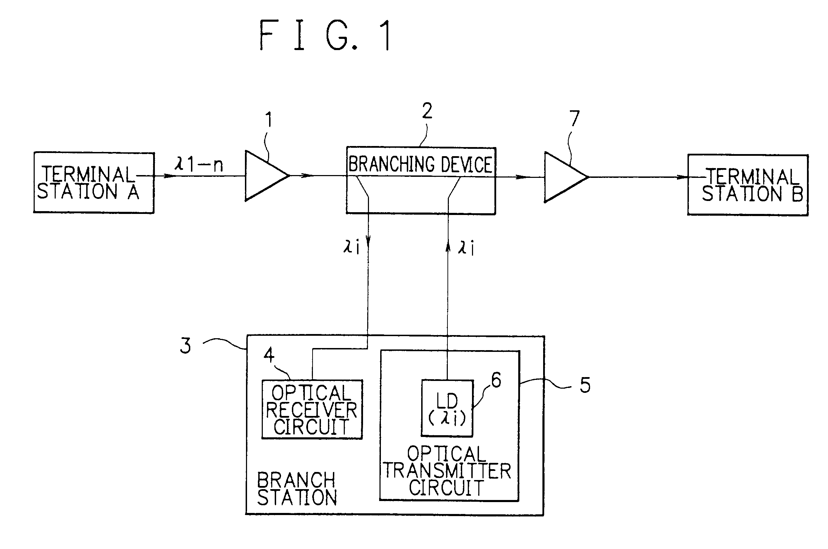

Referring to Fig. 1, there is shown a terminal station A arranged to optically integrate a plurality of optical signals having different wavelengths $\lambda 1 \sim \lambda n$ so as to output the signals to one optical fibre cable. These optical signals are passed through an optical amplifier 1 and sent to a branching device 2. At this point, an optical signal having a wavelength $\lambda i$ is branched off and transmitted to a branch station 3. At the branch station 3, the optical signal with the wavelength $\lambda i$ is received by an optical receiver circuit 4. A signal of the same wavelength $\lambda i$ as that which is branched off at the branching device 2 is generated at LD (optical semiconductor laser diode) 6 in an optical transmitter circuit 5, and sent to the branching device 2.

The branching device 2 inserts the optical signal having the wavelength $\lambda i$ into the optical signals from the optical amplifier 1 with the wavelengths $\lambda 1 \sim \lambda n$ (excluding $\lambda i$) and the optical signals pass via an optical amplifier 7 to a terminal station B. A control is applied to the optical amplifiers 1 and 7 for fixing their output levels, even when their input levels change.

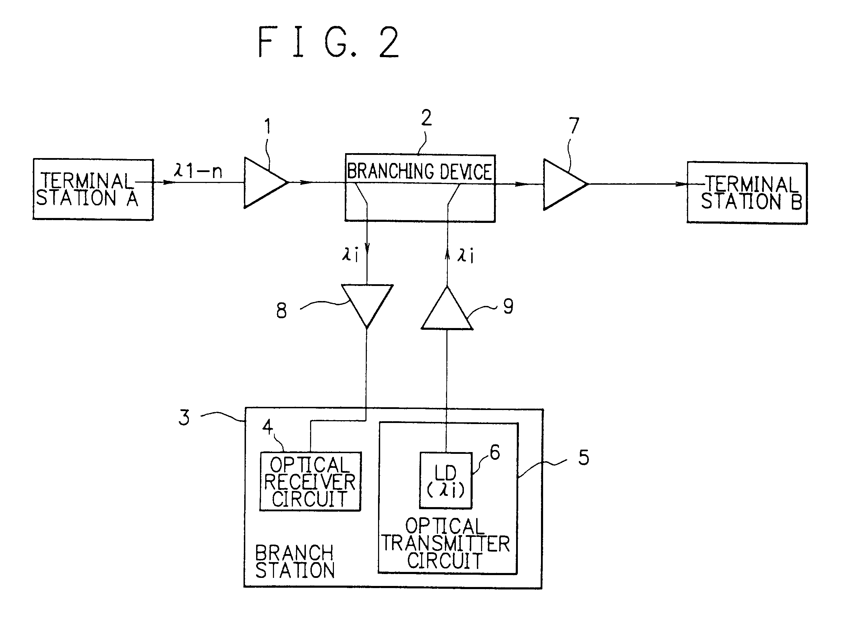

Moreover, when the interval between the branch station 3 and the branching device 2 is long as it is shown in Fig. 2, the arrangement has optical amplifiers 8 and 9 between the branch station 3 and the branching device 2. The optical amplifiers 8 and 9 have a control which fixes the output level.

Furthermore, regarding the branching device 2, whether conducting, branching or inserting a signal, the output level of the optical signal with the wavelengths $\lambda 1 \sim \lambda n$ (excluding $\lambda i$), and the output level of the optical signal with the wavelength $\lambda i$ have to be the same. The reason for that is that, if the output levels are different, the signal-to-noise ratios (S/N) of the signal with the wavelength $\lambda i$ and the other signals would not match, which will affect the transmission quality.

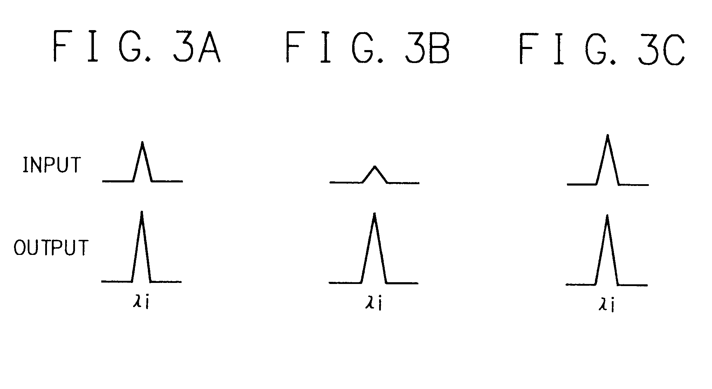

Next, the operation of the optical amplifier will be described with reference to Fig. 3. The optical amplifier is controlled so that the output level is fixed even if the input level is altered when the output of the transmission line or the optical amplifier of the former stage is changed.

That is to say, as is shown in Figs. 3A, 3B, and 3C, the optical amplifier is controlled so that signals with constant level are output at all times, even if the input signals are input with altered levels.

As to the previously proposed system shown in Fig. 1, the matching of the level of the transmission optical signals with the wavelengths $\lambda 1 \sim \lambda n$ (excluding $\lambda i$), which are not branched off at the branching device, and the level of an inserted optical signal with the wavelength $\lambda i$ is possible by altering the insertion signal level at the branch station 3. However, as is shown in Fig. 2, when the interval between the branch station 3 and the branching device 2 is long, the optical amplifiers 8 and 9 for amplifying the signal are inserted in between the branch station 3 and the branching device 2. Generally, as is mentioned above, these optical amplifiers take control of fixing the output level, even if the input level alters to some extent. Therefore, in arranging the cable, either the length of the cable should be determined, or the output level of the optical amplifier should be adjusted before it is inserted in the branching device 2, in order that the output level of each of the signals from the branching device is fixed. As to the way of determining the length of the cable, which has a transmission loss of 0.2 dB per 1 km of length, when there is a gap of 1 dB an extra 5 km of cable needs to be connected.

In addition, when it is desired that the number of signals should be increased between the terminal stations A and B, or for example, when it is desired that the signals should be increased from two signals $\lambda 1$ and $\lambda 2$ to four signals $\lambda 1$ to $\lambda 4$, the output level of the optical amplifier is reduced to a half, as compared to the case in which there are two signals. Accordingly, the input level of the branching device 2 is also reduced to a half. Therefore, were the input level of the branching device 2 to be reduced, it would no longer match the input level from the branch station.

A first problem with the above mentioned previously proposed example is the possible deterioration in the workability of the system at the time of providing the cable. The reason for this is that the length of the cable has to be determined, or the output level of the optical amplifier which is in front of the branching device has to be adjusted, in order to fix the output level of each of the signals from the branching device.

A second problem concerning the above previously proposed example is that it is not possible to adjust the output level after the cable has been provided. That is because the input level of the branching device is always constant even when the level at the branch station is adjusted, since the optical amplifier has its output level fixed.

A third problem with the previously proposed example is that the transmission capacity cannot be increased after the system has been built. The reason for this is that the output level of the optical amplifier is fixed, which leads to a decrease in the input level of the branching device when the number of signals is increased at the terminal station A, thus causing inconsistency with the input level from the branch station.

Features of arrangements to be described below, by way of example, in illustration of the present invention are that it is possible easily to adjust the levels of transmission of the optical signals, and to increase the transmission capacity after the system has been built.

In a particular arrangement to be described below, by way of example in illustration of the invention, an optical transmitting device having an ADM function and employing a WDM transmission system includes a plurality of optical signal generating means for generating a plurality of optical signals having different wavelengths, an integrating means for integrating the plurality of optical signals, and an adjusting means for adjusting the levels of the optical signals output from one of the plurality of optical signal generating means.

Moreover, as to the above mentioned optical transmitting device, it is preferable, although not essential, that the optical transmitting device should include an optical amplifying means in which each of the integrated optical signals which is input to and integrated in the integrating means has a fixed controlled output level.

It will be seen from the following description that in one particular optical communication system to be described by way of example in illustration of the invention, there are transmitted to a common optical transmission line a plurality of optical signals having different wavelengths, one optical signal with a particular wavelength from among the plurality of optical signals being branched at a branching device so as to transmit the optical signal with the particular wavelength to a branch station, another optical signal with the particular wavelength being generated at the branch station and transmitted to the branching device, the branching device inserting the another optical signal into the plurality of optical signals, excluding the one which has been branched off, so as to have the optical signals transmitted, the branch station generating an adjustment optical signal having a wavelength different from the particular wavelength, the branch station integrating the adjustment optical signal and the another optical signal having the particular wavelength, the branch station transmitting each of the integrated optical signals to the branching device through an optical amplifier having an output level which is controlled to be fixed, and the branch station adjusting the level of the adjustment optical signal.

Furthermore, in another particular arrangement to be described below by way of example in illustration of the invention there is transmitted from a terminal station, in an optical communication system, to a common optical transmission line, a plurality of optical signals having different wavelengths, the terminal station generating an adjustment optical signal having a wavelength different from the plurality of wavelengths, the terminal station integrating the adjustment optical signal and the plurality of optical signals, and the terminal station transmitting each of the integrated optical signals through an optical amplifier where an output level is controlled to be fixed.

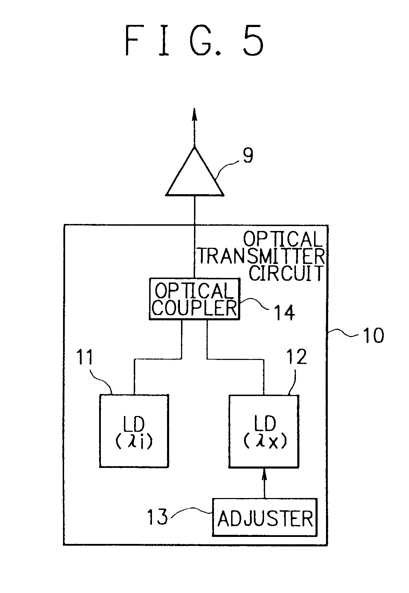

The following description and drawings disclose by means of examples illustrated in Figs. 5 to 8, the invention which is characterised in the appended claims, whose terms determine the extent of the protection conferred hereby.

In the drawings:-

Fig. 5 is a block diagram showing an optical transmitting device,

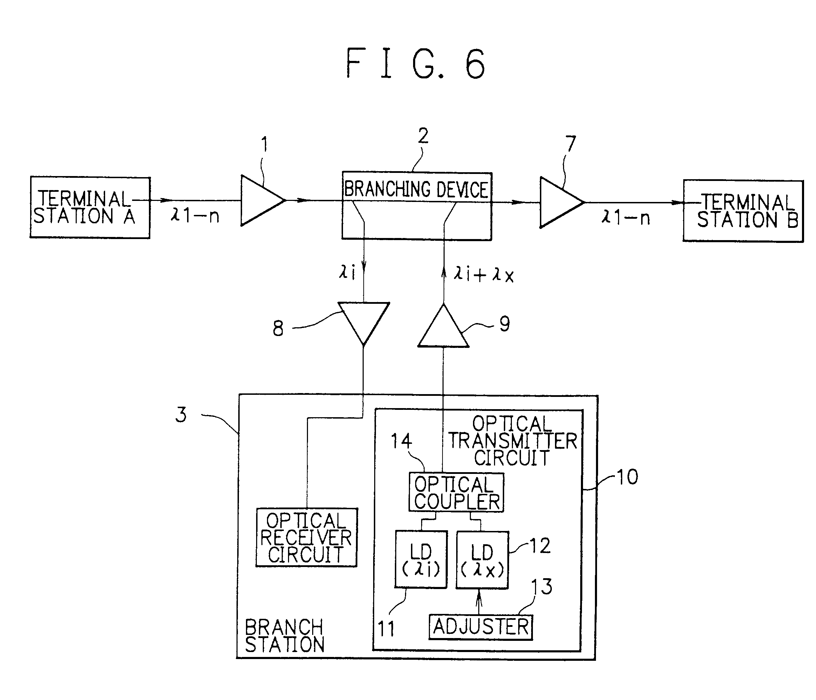

Fig. 6 is a block diagram showing an optical communication system,

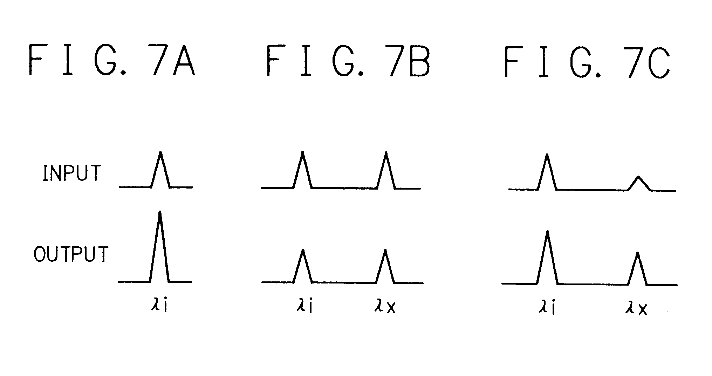

Fig. 7 is a waveform diagram showing wavelengths of inputs and outputs of the optical amplifier shown in Fig. 6, and

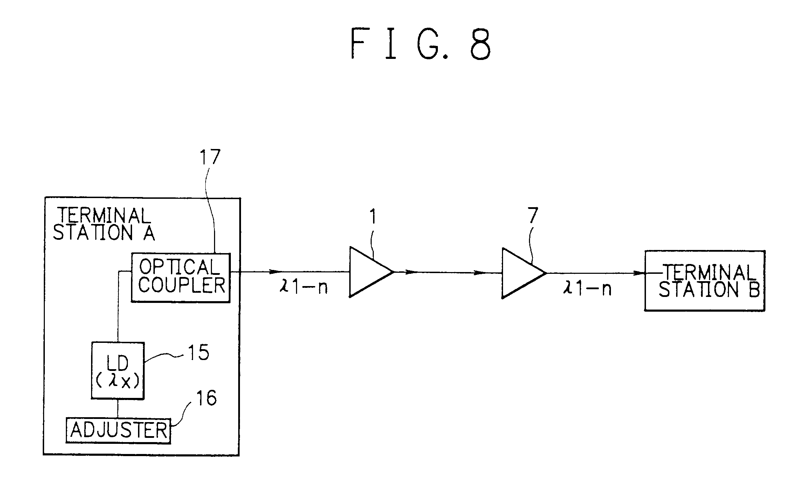

Fig. 8 is a block diagram showing an optical communication system of another embodiment.

Referring now to the drawings, in which an optical communication system and an optical transmitting device are shown, Fig. 5 shows the structure of an optical transmitter circuit illustrating an optical transmitting device. The optical transmitter circuit shown in Fig. 5 may be considered as a replacement for the optical transmitter circuit indicated in Figs. 1 and 2.

In the arrangement shown in Fig. 5, a numerical code 10 indicates an optical transmitter circuit, 11 indicates a LD for generating an optical signal with a wavelength $\lambda i$, 12 indicates a LD for generating an adjustment optical signal with a wavelength $\lambda x$, 13 indicates an adjuster for adjusting an output level of the LD 12, and 14 indicates an optical coupler for integrating the outputs from the LDs 11 and 12 so as to transmit the output to an optical amplifier 9.

Fig. 6 shows one embodiment of an optical communication system illustrative of the present invention including an optical transmitter circuit 10 as shown in Fig. 5. As to parts corresponding to those shown in Fig. 2, the same numerical references are used, and the explanation of that part which corresponds to that of Fig. 2 will be omitted. The optical transmitter circuit 10 is provided within the branch station 3.

Next, the operation of the optical communication system will be described. As shown in Fig. 5 and Fig.6, a transmission optical signal having the wavelength $\lambda i$ is output from LD 11 within the optical transmitter circuit 10, while the adjustment optical signal $\lambda x$ is output from LD 12. The optical signals having the wavelengths $\lambda i$ and $\lambda x$ are synthesized at the optical coupler 14 and output from the branch station 3. The optical signal being transmitted from the branch station 3 passes through the optical amplifier 9 and input to the branching device 2. Here, the output of the optical amplifier 9 is as illustrated in Fig. 7. That is, by transmitting the adjustment optical signal with the wavelength $\lambda x$, in addition to the transmission signal with the wavelength $\lambda i$, the output from the optical amplifier 9 has a stable output level which is practically the sum of the levels of the signal of wavelength $\lambda x$ and the signal of wavelength $\lambda i$, as shown in Figs. 7B and 7C. This indicates that the output level can be altered if the signal with the wavelength $\lambda i$ is to be focused. Therefore, by adjusting the output level of the LD 12 by applying the adjuster 13, it is possible to alter the signal level of the signal with the wavelength $\lambda i$ within the output from the optical amplifier 9. Moreover, Fig. 7A illustrates the previously proposed arrangement in which only the signal with the wavelength $\lambda i$ is output from the branch station 3.

Fig. 7 will now be described in more detail. The output of the present optical transmitter circuit 10 provides the input to the optical amplifier 9 and is amplified by the optical amplifier 9 and thence output. At this point, as the output from the optical amplifier 9 is controlled so that it is fixed, the input becomes $\lambda i + \lambda x = 1$. Furthermore, the relation between the wavelengths $\lambda i$ and $\lambda x$ are given by the following expressions: as to the wavelength $\lambda i$, $\lambda i/(\lambda i + \lambda x)$, and as to the wavelength $\lambda x$, $\lambda x/(\lambda i + \lambda x)$.

For instance, in assuming that the gain of the optical amplifier 9 is 10 dB (10 times);

(a) the output when $\lambda x$ equals 0 is

$$\{\lambda i/(\lambda i + \lambda x)\} \times 10 = \{\lambda i/(\lambda i + 0) \times 10 = 10,$$

(b) the output when $\lambda x$ equals $\lambda i$ is

$$\{\lambda i/(\lambda i + \lambda x)\} \times 10 = \{\lambda i/(\lambda i + \lambda i)\} \times 10 = 5,$$

and
(c) the output when $\lambda x$ equals $2\lambda i$ is

$$\{\lambda i/(\lambda i + \lambda x)\} \times 10 = \{\lambda i/(\lambda i + 2\lambda i)\} \times 10 = 3.3.$$

Accordingly, it is comparatively easy to change the level of the optical signal having the wavelength $\lambda i$ by altering the level of the optical signal having the wavelength $\lambda x$.

In the particular embodiment being described, it is possible to obtain improved operation efficiency at the time of providing the cable. This is possible because the input level of the branching device 2 does not have to be adjusted by the cable, or the optical amplifier, the output level of each of the signals from the branching device 2 being capable of being fixed as a result of manipulation at the branch station 3.

Moreover, in the particular embodiment, it is possible to augment the transmission capacity after the system has been built. This is possible since the output level for each of the wavelengths $\lambda 1 \sim \lambda n$ of the branching device 2 can be fixed owing to the fact that the insertion signal level of the insertion optical signal from the branch station 3 with the wavelength $\lambda i$ is capable of being adjusted, even though the input level of the transmission signal of the branching device 2 becomes small with regard to the increase in the transmission capacity of the terminal station A.

Fig. 8 shows another embodiment illustrative of the present invention, in which optical signals with wavelengths $\lambda 1 \sim \lambda n$ are transmitted by WDM transmission from a terminal station A to terminal station B through optical amplifiers 1 and 7. At the terminal station A, there is provided an LD 15 for generating an adjustment optical signal with a wavelength $\lambda x$, an adjuster 16 for adjusting the output level of the LD 15, and an optical coupler 17 for synthesizing the adjustment optical signal and the other transmission optical signals.

Such a structure as indicated above can also be used in adjusting the level of the adjustment optical signal even when the output levels of the optical amplifiers 1 and 7 are controlled to be fixed, with the result that the level of the transmission optical signal can be altered comparatively easily. In addition, in this particular embodiment, the terminal station A serves as the optical transmitting device.

Thus it will be seen that there has been described above an optical transmitting device in which a plurality of optical signals with different wavelengths are generated, synthesized and output, and one optical signal among the plurality of optical signals is arranged so that it can have its level adjusted. This optical signal, which is capable of being adjusted, is employed as an adjustment optical signal for adjusting the level of another optical signal. Therefore, the level of another optical signal within the output from the optical amplifier can easily be changed by simply adjusting the level of the adjustment optical signal, even when an optical amplifier is employed and where the output level is controlled to be fixed.

Accordingly, it may be seen that in applying the above described arrangements to an optical communication system having an optical ADM function and employing a WDM transmission method, it is possible to obtain better operational efficiency at the time of providing the cable, and it is also possible to adjust the levels of the optical signals and increase the transmission capacity comparatively easily.

Moreover, in an optical communication system as described above, an optical signal with a particular wavelength and an adjustment optical signal with a different wavelength are generated and integrated at a branch station, after which a signal with an integrated wavelength passes through optical amplifying means having its output level being controlled to be fixed, and is finally transmitted to a branching device.

Furthermore, a plurality of optical signals with different wavelengths and an adjustment optical signal may be generated and integrated at a terminal station, after which a signal with an integrated wavelength passes through optical amplifying means having its output level controlled to be fixed, and is eventually transmitted to the branching device.

Consequently, with an optical communication system as described above, it is possible to obtain better operation efficiency at the time of providing or setting the cable, and it is also possible to adjust the levels of the optical signals and increase the transmission capacity comparatively easily.

It will be understood that, although particular embodiments have been described, by way of example, in illustration of the invention, variations and modifications thereof as well as other embodiments may be employed within the scope of the appended claims.

**Claims**

1. An optical transmitting device having an ADM function and employing a WDM transmission system including a plurality of optical signal generating means for generating a plurality of optical signals having different wavelengths, an integrating means for integrating the plurality of optical signals, and an adjusting means for adjusting the levels of the optical signals output from one of the plurality of optical signal generating means.

2. An optical transmitting device as claimed in claim 1, including an optical amplifying means, each of the integrated optical signals integrated by the integrating means being input thereto and an output level thereof being controlled to be fixed.

3. An optical communication system having means for transmitting a plurality of optical signals having different wavelengths, to a common optical transmission line, a branching device for branching one optical signal with a particular wavelength from among the plurality of optical signals and transmitting the one optical signal with the particular wavelength to a branch station, and means for generating at the branching station another optical signal with the particular wavelength, and for transmitting the another optical signal to the branching device, the branching device inserting the another optical signal into the plurality of optical signals, excluding the one which has been branched off, and transmitting the optical signals, the branch station generating an adjustment optical signal having a wavelength different from the particular wavelength, the branch station integrating the adjustment optical signal and the another optical signal having the particular wavelength, the branch station transmitting each of the integrated optical signals to the branching device via an optical amplifier having an output level controlled to be fixed, and the branch station adjusting the level of the adjustment optical signal.

4. An optical communication system for transmitting a plurality of optical signals having different wavelengths from a terminal station to a common optical transmission line, the terminal station generating an adjustment optical signal having a wavelength different from the plurality of wavelengths, the terminal station integrating the adjustment optical signal and the plurality of optical signals, and the terminal station transmitting each of the integrated optical signals via an optical amplifier in which the output level is controlled to be fixed.

# F I G. 1

TERMINAL STATION A → λ1−n → ▷ 1 → BRANCHING DEVICE 2 → ▷ 7 → TERMINAL STATION B

λi ↓          λi ↑

BRANCH STATION 3

OPTICAL RECEIVER CIRCUIT 4

OPTICAL TRANSMITTER CIRCUIT 5
LD (λi) 6

EP 0 844 756 A2

# FIG. 2

EP 0 844 756 A2

FIG. 3A    FIG. 3B    FIG. 3C

INPUT

OUTPUT

$\lambda i$    $\lambda i$    $\lambda i$

FIG. 4A

INPUT

OUTPUT

$\lambda 1$ $\lambda 2$

FIG. 4B

$\lambda 1$ $\lambda 2$ $\lambda 3$ $\lambda 4$

# F I G. 5

OPTICAL
TRANSMITTER
CIRCUIT

OPTICAL
COUPLER — 14

— 10

11

12

LD
($\lambda$i)

LD
($\lambda$x)

13 — ADJUSTER

# FIG. 6

EP 0 844 756 A2

FIG. 7A    FIG. 7B    FIG. 7C

INPUT

OUTPUT

λi          λi      λx          λi      λx

# FIG. 8

EP 0 844 756 A2